# EUROPÄISCHE PATENTSCHRIFT

(11) **EP 3 999 764 B1**
(45) Veröffentlichungstag und Bekanntmachung des Hinweises auf die Patenterteilung: **07.01.2026**
(21) Anmeldenummer: 20740590.3
(22) Anmeldetag: 13.07.2020
(51) Int. Cl.: F16L 9/12, F16L 11/04, F16L 11/12, F01P 11/04, B32B 1/08, B32B 27/08, B32B 27/32, B32B 27/34

(54) **FLUIDLEITUNG MIT EINEM ROHR**
FLUID LINE HAVING A PIPE
CONDUITE DE FLUIDE POURVUE D'UN TUYAU

(30) Priorität: 15.07.2019 DE 102019119108
(43) Veröffentlichungstag der Anmeldung: 25.05.2022
(73) Patentinhaber: NORMA Germany GmbH, 63477 Maintal (DE)
(72) Erfinder: BAUER, Andreas, 63785 Obernburg (DE)
(74) Vertreter: Patentanwälte Olbricht Buchhold Keulertz
(86) Internationale Anmeldenummer: PCT/EP2020/069702
(87) Internationale Veröffentlichungsnummer: WO 2021/009095

(56) Entgegenhaltungen:
- EP-A1- 3 322 588
- EP-A1- 3 482 987
- WO-A1-2016/141902
- CN-A- 107 022 848
- CN-U- 206 802 531
- DE-A1- 102016 001 744
- FR-A1- 2 844 573
- JP-A- 2017 155 764
- JP-A- 2019 059 059

## Beschreibung

Die Erfindung betrifft eine Fluidleitung mit einem Rohr.

Leitungen zum Transport von Fluiden, wie z. B. Kühlwasser in Fahrzeugen, müssen während des Einsatzes spezifischen Anforderungen genügen. So darf das Material der Leitung nicht durch das Fluid aufgelöst werden. Dies soll auch bei höheren Temperaturen vermieden werden. Weiter muss die Leitung für das transportierte Fluid und seine chemischen Komponenten impermeabel sein, damit das Fluid nicht durch die Wandung der Leitung dringen kann. Damit soll zum einen eine Verringerung der Qualität des transportierten Fluids und zum anderen ein Eindringen des Fluids in die Rohrwand der Leitung vermieden werden, um Veränderungen im Material der Rohrwand zu vermeiden. Weiter sollen Auswaschungen vermieden werden. Dies ist insbesondere dann relevant, wenn das Fluid in der Leitung steht, d.h., wenn zumindest zeitweise kein Transport des Fluids stattfindet. Zum anderen müssen die Leitungen mechanische Eigenschaften aufweisen, die eine einfache und sichere Verbindung der Leitung mit weiteren Leitungskomponenten erlauben.

Bekannt ist die Verwendung von mehrschichtigen Kunststoffleitungen. Diese Kunststoffleitungen weisen Kunststoffe auf, die die oben genannten Eigenschaften in Bezug auf Wasser bzw. wasserhaltige Fluide aufweisen. Die betreffenden Kunststoffe bzw. deren Verarbeitung sind jedoch vergleichsweise kostenintensiv. Andere, günstigere Kunststoffe, wie zum Beispiel Polyamid 6, werden im Stand der Technik nicht verwendet, da diese Kunststoffe durch Wasser aufgelöst werden bzw. durch die Wasseraufnahme veränderte physikalische Eigenschaften erhalten. So kann zum Beispiel eine Volumenzunahme oder eine Schädigung des Materials bei einer Wasseraufnahme erfolgen. Auch eine Schutzschicht aus einem wasserundurchlässigem Material wie zum Beispiel Polypropylen, Polyamid 12 oder Polyphthalamid bewirkt keinen ausreichenden Schutz vor der Diffusion von Wassermolekülen in das Innere des Rohrmaterials der Fluidleitung.

Aus EP 3 482 987 A1 ist eine Kühl-Rohrleitung für Kraftfahrzeuge bekannt. Vorzugsweise weist die Rohrleitung fünf Schichten auf und zwar von außen nach innen eine Außenschicht, eine erste Haftvermittlerschicht, eine Sperrschicht, eine zweite Haftvermittlerschicht und eine Innenschicht. Empfohlenermaßen besteht die Sperrschicht im Wesentlichen aus Polyamid 6. Empfohlenermaßen besteht die Innenschicht im Wesentlichen aus Polyethylen.

Aus EP 3 322 588 A1 ist eine Fluidleitung mit einem Rohr bekannt, das mindestens zwei Kunststoffschichten aufweist, wobei eine Kunststoffschicht Polyamid 6 aufweist und sich um eine zweite Kunststoffschicht, welche Polyphenylensulfid aufweist, erstreckt.

Aus FR 2 844 573 A1 ist eine mehrschichtige Leitung bekannt mit mindestens einer Schicht mit Polyphenylensulfid, einer Schicht mit einem Polyvinylalkohol-Ethylen-Copolymer und einer äußeren Schutzschicht bekannt.

Aus JP 2019 059059 A ist eine Kraftstoffleitung mit mehreren Schichten bekannt, wobei eine innere Schicht eine polyamidbasierten thermoplastische Elastomerkomposition aufweist und eine äußere Schicht einen thermoplastischen Kunststoff enthält, sodass eine geringe Kraftstoffdurchlässigkeit bei hoher Flexibilität und Biegbarkeit erreicht wird.

Aufgabe der Erfindung ist es, eine Fluidleitung bereitzustellen, die kostengünstig ist.

Hauptmerkmale der Erfindung sind in den Ansprüchen 1, 7 und 8 angegeben. Ausgestaltungen sind Gegenstand der Ansprüche 2 bis 6.

Bei einer Fluidleitung mit einem Rohr, das mindestens zwei Kunststoffschichten aufweist, ist erfindungsgemäß vorgesehen, dass eine erste Kunststoffschicht hydrolyseresistentes Polyamid 6 (PA6) aufweist.

Kern der Erfindung ist die Verwendung von hydrolyseresistentem Polyamid 6 in mindestens einer der beiden Kunststoffschichten der Fluidleitung. Das hydrolyseresistente Polyamid 6 wird durch eine Wasseraufnahme geringer geschädigt als gängiges Polyamid 6. Damit wird das hydrolyseresistente Polyamid 6 der ersten Kunststoffschicht nicht bzw. in geringerem Maß als gängiges Polyamid 6 durch die Wassermoleküle verändert bzw. aufgelöst. Damit kann erstmals ein Polyamid 6 Material zur Herstellung einer Fluidleitung zum Führen von Wasser verwendet werden. Das hydrolyseresistente Polyamid 6 ist kostengünstig und bewirkt bei einer Verwendung zur Herstellung einer Grundstruktur für die Fluidleitung, dass andere, teurere Materialien in geringerem Umfang benötigt werden. Insbesondere kann weniger Polyamid 12 verwendet werden, das im Vergleich zu Polyamid 6 kostenintensiver ist. Fluidleitungen, die das hydrolyseresistente Polyamid 6 aufweisen, weisen dabei akzeptable Eigenschaften bei der Nutzung als Leitungen für Wasser auf und sind dennoch kostengünstig.

Die zweite Kunststoffschicht kann frei von hydrolyseresistentem Polyamid 6 (PA6) sein.

Die zweite Kunststoffschicht besteht damit aus einem anderen Material als dem hydrolyseresistenten Polyamid 6. Auf diese Weise können zum Beispiel Verstärkungsschichten oder Barriereschichten für die Fluidleitung hergestellt werden.

Erfindungsgemäß erstreckt sich die erste Kunststoffschicht um die zweite Kunststoffschicht.

Die zweite Kunststoffschicht ist weiter innen in der Fluidleitung angeordnet als die erste Kunststoffschicht.

Die zweite Kunststoffschicht kann Polypropylen (PP) aufweisen. Die zweite Kunststoffschicht weist Polyethylen (PE) auf.

Polypropylen und Polyethylen weisen beide gute thermische Eigenschaften auf und können als Barriereschicht gegenüber dem in der Fluidleitung fließenden Medium, zum Beispiel Wasser, verwendet werden. Sie verringern damit den Kontakt des hydrolyseresistenten Polyamids 6 mit Wassermolekülen.

Die zweite Kunststoffschicht weist zusätzlich Polyphenylensulfid (PPS) auf.

Polypropylensulfid weist weiter verbesserte thermische Eigenschaften als Polypropylen oder Polyethylen auf.

Die Fluidleitung kann mindestens drei Kunststoffschichten aufweisen, wobei die erste Kunststoffschicht zwischen der zweiten Kunststoffschicht und einer dritten Kunststoffschicht angeordnet ist.

Die erste Kunststoffschicht aus dem hydrolyseresistenten Polyamid 6 kann damit die Grundstruktur der Fluidleitung bilden. Die zweite Kunststoffschicht und die dritte Kunststoffschicht können die erste Kunststoffschicht dabei gegen das in dem Fluidleitung strömende Medium bzw. gegen äußere Einflüsse abschirmen.

Die dritte Kunststoffschicht kann frei von hydrolyseresistentem Polyamid 6 sein.

Die erste Kunststoffschicht kann weiter in radialer Richtung zwischen 25 % und 75 %, vorzugsweise zwischen 30 % und 70 %, weiter vorzugsweise zwischen 40 % und 60 %, einer Gesamterstreckung der mindestens zwei Kunststoffschichten des Rohres aufweisen.

Damit ist gemeint, dass die Wanddicke des Rohres der Fluidleitung zu 25 % bis 75 % durch die erste Kunststoffschicht gebildet wird. Je größer der Anteil der ersten Kunststoffschicht aus dem kostengünstigen hydrolyseresistenten Polyamid 6 ist, desto kostengünstiger kann die Fluidleitung ausgebildet werden.

Weiter betrifft die Erfindung ein Kühlwassersystem für ein Fahrzeug, wobei das Kühlwassersystem eine Kühlvorrichtung, ein zu kühlendes Element und mindestens eine Fluidleitung nach der vorhergehenden Beschreibung aufweist, wobei die mindestens eine Fluidleitung die Kühlvorrichtung und das zu kühlende Element fluidkommunizierend verbindet.

Vorteile und Wirkungen sowie Weiterbildungen des Kühlwassersystems ergeben sich aus den Vorteilen und Wirkungen sowie Weiterbildungen der oben beschriebenen Fluidleitung. Es wird daher in dieser Hinsicht auf die vorangegangene Beschreibung verwiesen.

In einem weiteren Aspekt betrifft die Erfindung die Verwendung einer Fluidleitung gemäß der vorhergehenden Beschreibung zum Fördern von Wasser in einem Fahrzeug.

Vorteile und Wirkungen sowie Weiterbildungen der Verwendung der Fluidleitung ergeben sich aus den Vorteilen und Wirkungen sowie Weiterbildungen der oben beschriebenen Fluidleitung. Es wird daher in dieser Hinsicht auf die vorangegangene Beschreibung verwiesen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung einer Fluidleitung mit mindestens zwei Kunststoffschichten;
- Fig. 2a-c: verschiedenen Beispiele einer schematischen Schnittdarstellung einer Fluidleitung nach Fig. 1;
- Fig. 3: eine schematische Darstellung eines Kühlwassersystems mit der Fluidleitung; und
- Fig. 4: eine schematische Darstellung eines Fahrzeugs mit der Fluidleitung.

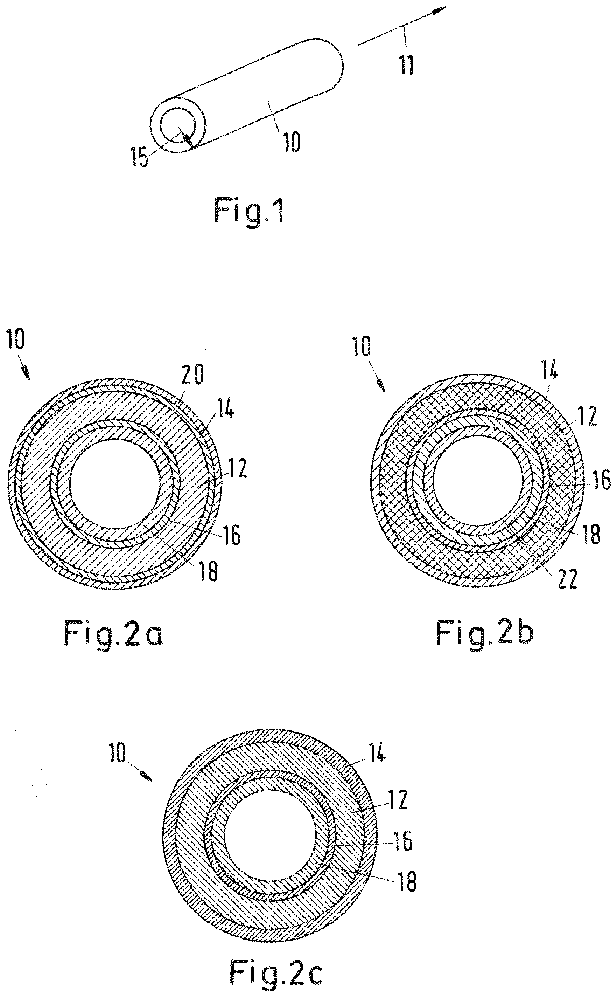

Figur 1 zeigt eine schematische Darstellung einer Fluidleitung in ihrer Gesamtheit mit dem Bezugszeichen 10.

Die Fluidleitung 10 erstreckt sich dabei entlang einer Erstreckungsrichtung 11. Senkrecht zu dieser Erstreckungsrichtung 11 ist die radiale Richtung 15 der Fluidleitung 10 definiert.

Die Figuren 2a bis 2c zeigen Schnittansichten verschiedener nicht von der Erfindung umfasster Beispiele für eine Fluidleitung 10 gemäß Figur 1.

Figur 2a zeigt dabei ein nicht von der Erfindung umfasstes Beispiel mit insgesamt fünf Kunststoffschichten. Die erste Kunststoffschicht 12 ist dabei der Mitte angeordnet und aus dem hydrolyseresistenten Polyamid 6 ausgebildet. Weiter wird die erste Kunststoffschicht 12 innen und außen von jeweils zwei weiteren Kunststoffschichten begrenzt. Weiter weist die erste Kunststoffschicht 12 zum Beispiel 45 % bis 55 %, vorzugsweise 50 %, der Gesamtausdehnung der Rohrwand des Rohres der Fluidleitung 10 auf.

Die zweite Kunststoffschicht 14 erstreckt sich um die erste Kunststoffschicht 12. Die zweite Kunststoffschicht 14 liegt dazu unmittelbar an der ersten Kunststoffschicht 12 an. Sie kann in diesem Beispiel Polyamid 612 aufweisen und zum Beispiel 5 % bis 15 % vorzugsweise 10 %, der Gesamtausdehnung der Rohrwand ausmachen.

Die dritte Kunststoffschicht 16 wird von der ersten Kunststoffschicht 12 umschlossen und liegt direkt an der ersten Kunststoffschicht 12 an. In diesem Beispiel kann die dritte Kunststoffschicht 16 ein Polypropylen aufweisen und beispielsweise 5 % bis 15 %, vorzugsweise 10 %, zur Ausdehnung der Rohrwand beitragen.

Eine vierte Kunststoffschicht 18 kann sich innerhalb der dritten Kunststoffschicht 16 erstrecken, d.h. die vierte Kunststoffschicht 18 wird von der dritten Kunststoffschicht 16 umschlossen. In diesem Beispiel kann die vierte Kunststoffschicht 18 aus einem weiteren Polypropylenmaterial hergestellt sein und beispielsweise 15 % bis 25 %, vorzugsweise 20 %, der Gesamtausdehnung der Rohrwand aufweisen. Dabei bildet in diesem Beispiel die vierte Kunststoffschicht 18 die innerste Schicht des Fluidleitung 10.

Eine fünfte Kunststoffschicht 20 kann als äußere Schicht vorgesehen sein, die sich um die zweite Kunststoffschicht 14 erstreckt und alle anderen Kunststoffschichten umschließt. Die fünfte Kunststoffschicht 18 kann dabei aus einem Polyamid 12 Material hergestellt sein und in radialer Richtung 15 beispielsweise 5 % bis 15 %, vorzugsweise 10, % zu Gesamtausdehnung der Rohrwand beitragen.

Weiter kann die fünfte Kunststoffschicht 20 vorzugsweise zusätzlich ein Farbgranulat aufweisen. Auf diese Weise kann die fünfte Kunststoffschicht 20 eingefärbt werden. Der restliche Anteil der fünften Kunststoffschicht 20 kann weiter zusätzlich durch andere Stoffe gebildet werden, die die physikalischen Eigenschaften der fünften Kunststoffschicht 20 leicht verändern. Die grundlegenden Eigenschaften der fünften Kunststoffschicht 20 werden durch die das Farbgranulat und/oder die Zusatzstoffe im Wesentlichen nicht verändert.

Figur 2b zeigt eine Schnittdarstellung eines weiteren nicht von der Erfindung umfassten Beispiels einer Fluidleitung 10 mit fünf Kunststoffschichten. Die erste Kunststoffschicht 12 ist dabei der unmittelbar nach der äußeren Schicht angeordnet und aus dem hydrolyseresistenten Polyamid 6 ausgebildet. Weiter wird die erste Kunststoffschicht 12 innen und außen von der zweiten Kunststoffschicht 14 und der dritten Kunststoffschicht 16 begrenzt. Weiter weist die erste Kunststoffschicht 12 in diesem Beispiel 35 % bis 45 %, vorzugsweise 40 %, der Gesamtausdehnung der Rohrwand des Rohres der Fluidleitung 10 auf.

Die zweite Kunststoffschicht 14 erstreckt sich dabei um die erste Kunststoffschicht 12 und bildet die äußerste Schicht der Fluidleitung 10. Die zweite Kunststoffschicht 14 liegt unmittelbar an der ersten Kunststoffschicht 12 an. Die zweite Kunststoffschicht 14 kann in diesem Beispiel Polyamid 612 aufweisen und zum Beispiel 5 % bis 15 %, vorzugsweise 10 %, der Gesamtausdehnung der Rohrwand ausmachen.

Weiter kann die zweite Kunststoffschicht 14 vorzugsweise zusätzlich ein Farbgranulat aufweisen. Auf diese Weise kann die zweite Kunststoffschicht 14 eingefärbt werden. Der restliche Anteil der zweiten Kunststoffschicht 14 kann weiter zusätzlich durch andere Stoffe gebildet werden, die die physikalischen Eigenschaften der zweiten Kunststoffschicht 14 leicht verändern. Die grundlegenden Eigenschaften der zweiten Kunststoffschicht 14 werden durch die das Farbgranulat und/oder die Zusatzstoffe im Wesentlichen nicht verändert.

Die dritte Kunststoffschicht 16 wird von der ersten Kunststoffschicht 12 umschlossen und liegt direkt an der ersten Kunststoffschicht 12 an. In diesem Beispiel kann die dritte Kunststoffschicht 16 ein Polypropylen aufweisen und beispielsweise 7 % bis 13 %, vorzugsweise 10 %, zur Ausdehnung der Rohrwand beitragen.

Eine vierte Kunststoffschicht 18 kann sich innerhalb der dritten Kunststoffschicht 16 erstrecken, d.h. die vierte Kunststoffschicht 18 wird von der dritten Kunststoffschicht 16 umschlossen. In diesem Beispiel kann die vierte Kunststoffschicht 18 aus einem hochdichten Polyethylen hergestellt sein und beispielsweise 15 % bis 25 %, vorzugsweise 20 %, der Gesamtausdehnung der Rohrwand aufweisen.

Eine sechste Kunststoffschicht 22 kann als Kontaktschicht zum durch die Fluidleitung 10 fließenden Fluid vorgesehen sein, die sich innerhalb der vierten Kunststoffschicht 18 erstreckt. D. h. die vierte Kunststoffschicht 18 umschließt die sechste Kunststoffschicht 22. Die sechste Kunststoffschicht 18 kann dabei aus einem Polypropylen Material hergestellt sein und in radialer Richtung 15 beispielsweise 10 % bis 20 %, vorzugsweise 15, % zu Gesamtausdehnung der Rohrwand beitragen.

Figur 2c zeigt eine Schnittdarstellung eines weiteren nicht von der Erfindung umfassten Beispiels einer Fluidleitung 10. In diesem Beispiel weist die Fluidleitung 10 jedoch lediglich vier Kunststoffschichten auf. Die erste Kunststoffschicht 12 ist unmittelbar nach der äußeren Schicht angeordnet und aus dem hydrolyseresistenten Polyamid 6 ausgebildet. Weiter wird die erste Kunststoffschicht 12 innen und außen von der zweiten Kunststoffschicht 14 und der dritten Kunststoffschicht 16 begrenzt. Weiter weist die erste Kunststoffschicht 12 in diesem Beispiel 55 % bis 65 %, vorzugsweise 60 %, der Gesamtausdehnung der Rohrwand des Rohres der Fluidleitung 10 auf.

Die zweite Kunststoffschicht 14 erstreckt sich um die erste Kunststoffschicht 12 und bildet die äußerste Schicht der Fluidleitung 10. Die zweite Kunststoffschicht 14 liegt unmittelbar an der ersten Kunststoffschicht 12 an. Die zweite Kunststoffschicht 14 kann in diesem Beispiel Polyamid 610 aufweisen und zum Beispiel 10 % bis 20 % vorzugsweise 15 %, der Gesamtausdehnung der Rohrwand ausmachen.

Weiter kann die zweite Kunststoffschicht 14 vorzugsweise zusätzlich ein Farbgranulat aufweisen. Auf diese Weise kann die zweite Kunststoffschicht 14 eingefärbt werden. Der restliche Anteil der zweiten Kunststoffschicht 14 kann weiter zusätzlich durch andere Stoffe gebildet werden, die die physikalischen Eigenschaften der zweiten Kunststoffschicht 14 leicht verändern. Die grundlegenden Eigenschaften der zweiten Kunststoffschicht 14 werden durch die das Farbgranulat und/oder die Zusatzstoffe im Wesentlichen nicht verändert.

Die dritte Kunststoffschicht 16 wird von der ersten Kunststoffschicht 12 umschlossen und liegt von innen direkt an der ersten Kunststoffschicht 12 an. In diesem Beispiel kann die dritte Kunststoffschicht 16 ein Polyphenylensulfid aufweisen und beispielsweise 5 % bis 15 %, vorzugsweise 10 %, zur Ausdehnung der Rohrwand beitragen.

Eine vierte Kunststoffschicht 18 kann sich innerhalb der dritten Kunststoffschicht 16 erstrecken, d.h. die vierte Kunststoffschicht 18 wird von der dritten Kunststoffschicht 16 umschlossen. In diesem Beispiel kann die vierte Kunststoffschicht 18 aus einem weiteren Polyphenylensulfid-Material hergestellt sein und die innerste Schicht der Fluidleitung 10 bilden. Weiter kann die vierte Kunststoffschicht 18 beispielsweise 10 % bis 20 %, vorzugsweise 15 %, der Gesamtausdehnung der Rohrwand aufweisen.

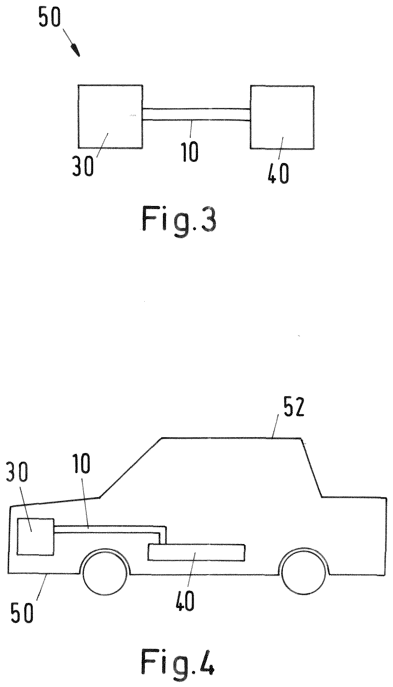

Figur 3 zeigt eine schematische Darstellung eines Systems, das in seiner Gesamtheit mit dem Bezugszeichen 50 bezeichnet wird.

Das Kühlsystem umfasst eine Kühlvorrichtung 30 und ein zu kühlendes Element 40. Die Kühlvorrichtung 30 und das kühlende Element 40 werden über mindestens eine Fluidleitung 10 gemäß der oben genannten Beschreibung miteinander fluidkommunizierend verbunden. Die Fluidleitung 10 kann dabei Kühlwasser zwischen der Kühlvorrichtung 30 und dem zu kühlenden Element 40 transportieren.

Figur 4 zeigt ein Fahrzeug 52, das ein Kühlsystem 50 aufweist. Das zu kühlende Element 40 kann dabei zum Beispiel ein Akkumulator eines Elektrofahrzeugs sein. Die Kühlvorrichtung 30 des Kühlsystems wird dabei mittels einer Fluidleitung 10 mit dem Akkumulator des Elektrofahrzeugs fluidkommunizierend verbunden.

Die Erfindung ist in vielfältiger Weise im Rahmen der Ansprüche abwandelbar.

### Bezugszeichenliste

- 10: Fluidleitung
- 11: Erstreckungsrichtung
- 12: erste Kunststoffschicht
- 14: zweite Kunststoffschicht
- 15: radiale Richtung
- 16: dritte Kunststoffschicht
- 18: vierte Kunststoffschicht
- 20: fünfte Kunststoffschicht
- 22: sechste Kunststoffschicht
- 30: Kühlvorrichtung
- 40: zu kühlendes Element
- 50: Kühlsystem
- 52: Fahrzeug

## Patentansprüche

1. Fluidleitung mit einem Rohr, das mindestens zwei Kunststoffschichten aufweist, wobei eine erste Kunststoffschicht (12) hydrolyseresistentes Polyamid 6 (PA6) aufweist, wobei sich die erste Kunststoffschicht (12) um eine zweite Kunststoffschicht (14) erstreckt, wobei die zweite Kunststoffschicht (14) Polyethylen (PE) aufweist, **dadurch gekennzeichnet, dass** die zweite Kunststoffschicht (14) zusätzlich Polyphenylensulfid (PPS) aufweist.

2. Fluidleitung nach Anspruch 1, **dadurch gekennzeichnet, dass** eine zweite Kunststoffschicht (14) frei von hydrolyseresistentem Polyamid 6 (PA6) ist.

3. Fluidleitung nach Anspruch 1, **dadurch gekennzeichnet, dass** die zweite Kunststoffschicht Polypropylen (PP) aufweist.

4. Fluidleitung nach einem der Ansprüche 1 bis 3, **dadurch gekennzeichnet, dass** die Fluidleitung (10) mindestens drei Kunststoffschichten aufweist, wobei die erste Kunststoffschicht (12) zwischen der zweiten Kunststoffschicht (14) und einer dritten Kunststoffschicht (16) angeordnet ist.

5. Fluidleitung nach Anspruch 4, **dadurch gekennzeichnet, dass** die dritte Kunststoffschicht (16) frei von hydrolyseresistentem Polyamid 6 (PA6) ist.

6. Fluidleitung nach einem der Ansprüche 1 bis 5, **dadurch gekennzeichnet, dass** die erste Kunststoffschicht (12) in radialer Richtung (15) zwischen 25 % und 75 %, vorzugsweise zwischen 30 % und 70 %, weiter vorzugsweise zwischen 40 % und 60 %, einer Gesamterstreckung der mindestens zwei Kunststoffschichten des Rohres aufweist.

7. Kühlwassersystem für ein Fahrzeug (52), wobei das Kühlwassersystem (50) eine Kühlvorrichtung (30), ein zu kühlendes Element (40) und mindestens eine Fluidleitung nach einem der vorhergehenden Ansprüche aufweist, wobei die mindestens eine Fluidleitung (10) die Kühlvorrichtung (30) und das zu kühlende Element (40) fluidkommunizieren verbindet.

8. Verwendung einer Fluidleitung (10) gemäß einem der Ansprüche 1 bis 6 zum Fördern von Wasser in einem Fahrzeug (52).

## Claims

1. Fluid line having a pipe which comprises at least two plastics layers, wherein a first plastics layer (12) comprises hydrolysis-resistant polyamide 6 (PA6), wherein the first plastics layer (12) extends around a second plastics layer (14), wherein the second plastics layer (14) comprises polyethylene (PE), **characterized in that** the second plastics layer (14) additionally comprises polyphenylene sulfide (PPS).

2. Fluid line according to Claim 1, **characterized in that** a second plastics layer (14) is free from hydrolysis-resistant polyamide 6 (PA6).

3. Fluid line according to Claim 1, **characterized in that** the second plastics layer comprises polypropylene (PP).

4. Fluid line according to any of Claims 1 to 3, **characterized in that** the fluid line (10) comprises at least three plastics layers, wherein the first plastics layer (12) is arranged between the second plastics layer (14) and a third plastics layer (16).

5. Fluid line according to Claim 4, **characterized in that** the third plastics layer (16) is free from hydrolysis-resistant polyamide 6 (PA6).

6. Fluid line according to any of Claims 1 to 5, **characterized in that** the first plastics layer (12) in radial direction (15) comprises between 25% and 75%, preferably between 30% and 70%, more preferably between 40% and 60%, of a total extent of the at least two plastics layers of the pipe.

7. Cooling water system for a vehicle (52), wherein the cooling water system (50) comprises a cooling device (30), an element (40) to be cooled and at least one fluid line according to any of the preceding claims, wherein the at least one fluid line (10) fluidically connects the cooling device (30) and the element (40) to be cooled.

8. Use of a fluid line (10) according to any of Claims 1 to 6 for conveying water in a vehicle (52).

## Revendications

1. Conduite de fluide avec un tuyau, qui comporte au moins deux couches en matière plastique, une première couche en matière plastique (12) comportant du polyamide 6 (PA6) résistant à l'hydrolyse, la première couche en matière plastique (12) s'étendant autour d'une deuxième couche en matière plastique (14), la deuxième couche en matière plastique (14) comportant du polyéthylène (PE), **caractérisée en ce que** la deuxième couche en matière plastique (14) comporte en supplément du polysulfure de phénylène (PPS).

2. Conduite de fluide selon la revendication 1, **caractérisée en ce qu'**une deuxième couche en matière plastique (14) est dépourvue de polyamide 6 (PA6) résistant à l'hydrolyse.

3. Conduite de fluide selon la revendication 1, **caractérisée en ce que** la deuxième couche en matière plastique comporte du polypropylène (PP).

4. Conduite de fluide selon l'une des revendications 1 à 3, **caractérisée en ce que** la conduite de fluide (10) comporte au moins trois couches en matière plastique, la première couche en matière plastique (12) étant disposée entre la deuxième couche en matière plastique (14) et une troisième couche en matière plastique (16).

5. Conduite de fluide selon la revendication 4, **caractérisée en ce que** la troisième couche en matière plastique (16) est dépourvue de polyamide 6 (PA6) résistant à l'hydrolyse.

6. Conduite de fluide selon l'une des revendications 1 à 5, **caractérisée en ce que** la première couche en matière plastique (12) comporte dans la direction radiale (15) entre 25 % et 75 %, de préférence entre 30 % et 70 %, par ailleurs de préférence entre 40 % et 60 % d'une extension totale des au moins deux couches en matière plastique du tuyau.

7. Système d'eau de refroidissement pour un véhicule (52), le système d'eau de refroidissement (50) comportant un dispositif de refroidissement (30), un élément (40) à refroidir et au moins une conduite de fluide selon l'une des revendications précédentes, l'au moins une conduite de fluide (10) raccordant le dispositif de refroidissement (30) et l'élément (40) à refroidir en communication fluidique.

8. Utilisation d'une conduite de fluide (10) selon l'une des revendications 1 à 6 pour transporter de l'eau dans un véhicule (52).
